(19) Europäisches Patentamt
European Patent Office
Office européen des brevets

(11) **EP 4 768 529 A1**

(12) **EUROPEAN PATENT APPLICATION**
published in accordance with Art. 153(4) EPC

(43) Date of publication:
01.07.2026 Bulletin 2026/27

(21) Application number: 24873004.6

(22) Date of filing: 26.09.2024

(51) International Patent Classification (IPC):
$C08J\ 9/00\ ^{(2006.01)}$  $C08K\ 3/18\ ^{(2006.01)}$
$C08L\ 83/06\ ^{(2006.01)}$  $C08G\ 77/12\ ^{(2006.01)}$
$C08G\ 77/16\ ^{(2006.01)}$  $C08G\ 77/20\ ^{(2006.01)}$
$H01M\ 10/655\ ^{(2014.01)}$

(52) Cooperative Patent Classification (CPC):
C08G 77/12; C08G 77/16; C08G 77/20; C08J 9/00;
C08K 3/18; C08L 83/06; H01M 10/655; Y02E 60/10

(86) International application number:
PCT/KR2024/014648

(87) International publication number:
WO 2025/071296 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 KR 20230128791

(71) Applicant: LG Chem, Ltd.
Yeongdeungpo-gu
Seoul 07336 (KR)

(72) Inventors:
• YOON, Kyung Jun
Daejeon 34122 (KR)
• LEE, Eok Hyung
Daejeon 34122 (KR)
• YANG, In Suk
Daejeon 34122 (KR)
• SEO, Sang Hyuk
Daejeon 34122 (KR)
• PARK, Sang Hun
Daejeon 34122 (KR)

(74) Representative: Hoffmann Eitle
Patent- und Rechtsanwälte PartmbB
Arabellastraße 30
81925 München (DE)

(54) **COMPOSITION**

(57) The present specification discloses a composition and a use thereof. The composition may form a low-density layer, sheet or film having excellent delay or prevention characteristics against heat and flames, and excellent flame retardancy. Such a layer, sheet or film may be referred to as a foam sheet. The present specification also discloses the composition or the foam sheet. For example, the composition or the foam sheet is applied to a product formed by integrating a plurality of elements, whereby it is possible to effectively respond to heat or flames generated from the elements while uniformly maintaining the temperature of the product. For example, the composition or the foam sheet is applied to the product, whereby even when abnormal heat generation, explosion, or ignition occurs in one of the plurality of elements, it is possible to prevent or minimize the influence of such heat generation, explosion, or ignition on other adjacent elements.

EP 4 768 529 A1

## Description

### Technical Field

This application claims the benefit of priority to Korean Patent Application No. 10-2023-0128791 dated September 26, 2023, the disclosure of which is incorporated herein by reference in its entirety.

The present specification relates to a composition and a use thereof.

### Background Art

The importance of technology for processing heat generated from products becomes bigger, but treatment, maintenance, and control of heat in products manufactured using multiple heat-generating elements (heating elements) are difficult problems.

For example, it is very important to prevent a so-called TR (Thermal Runaway) or TP (Thermal Propagation) phenomenon occurring in a battery module or a battery pack. A battery module or a battery pack comprises a plurality of battery cells or a plurality of battery modules, which are positioned relatively adjacent to each other.

In such a structure, the phenomenon in which abnormal heat generation, ignition, and/or explosion, and the like occurring in one battery cell and/or battery module is transmitted to other adjacent battery cells in a chain is called the TR or TP phenomenon. Chain ignition or chain explosion caused by such a TR or TP phenomenon must be managed in terms of stability.

Patent Document 1 discloses a silicone pad for thermal runaway delay, which is applicable to batteries. Patent Document 1 secures an effect of delaying heat diffusion by adding aluminum hydroxide or magnesium hydroxide to the silicone pad.

However, a flame-retardant effect of such a known silicone pad is inadequate. Furthermore, the silicone pad disclosed in Patent Document 1 has a relatively high specific gravity, thereby making it unsuitable for applications requiring weight saving.

<Prior Art Documents>

<Patent Documents>

(Patent Document 1) Korean Patent No. 10-2425374

### Disclosure

### Technical Problem

The present specification relates to a composition and a use thereof. The composition is a foamable composition, which can form a porous sheet (foam sheet) by foaming. The present specification is intended to disclose contents such that the foam sheet has excellent endothermic characteristics, blocking characteristics against heat and flames, and flame-retardant characteristics while being lightweight.

The composition or foam sheet disclosed herein can be efficiently utilized in various products requiring heat or flame management. For example, the composition or foam sheet is applied to a product formed by integrating multiple elements, whereby it is possible to efficiently prevent flames due to abnormal heat generation or explosion, and the like occurring in one of the multiple elements from spreading to other adjacent elements while maintaining the temperature of the product uniformly.

### Technical Solution

Among physical properties mentioned herein, the physical property affected by a temperature is a physical property measured at room temperature, unless otherwise specified.

The term room temperature is a natural temperature without artificially heating and cooling, and means, for example, any temperature within a range of about 10°C to 30°C, for example, a temperature of about 23°C or about 25°C or so.

In this specification, the unit of temperature is °C, unless otherwise specified.

Among physical properties mentioned herein, the physical property affected by a pressure is a physical property measured at normal pressure, unless otherwise specified. The term normal pressure is a natural pressure without artificially pressurizing and depressurizing, where about 1 atm or so (about 700 to 800 mmHg or so) is typically referred to as normal pressure.

Among physical properties mentioned herein, the physical property affected by humidity is a physical property measured at humidity artificially uncontrolled at the room temperature and normal pressure, unless otherwise specified.

The present specification relates to a composition. The term composition means a mixture of two or more components. The composition may be a foamable composition. The term foamable composition means a composition capable of forming a foam sheet through a foaming process. the foam sheet is a porous sheet, film, or layer containing one or more pores.

The foamable composition may comprise at least a polyorganosiloxane component and an inorganic hydrate. The term polyorganosiloxane component means a component composed of one polyorganosiloxane, or two or more polyorganosiloxanes. That is, the polyorganosiloxane component comprises only polyorganosiloxane.

As is well known, the polyorganosiloxane means a polymeric compound formed by a silicon-oxygen backbone (siloxane bond). Such a polyorganosiloxane contains at least one unit among four types of siloxane units (M, D, T and Q units), which are composed of a siloxane unit of a formula ($R_3SiO_{1/2}$), also commonly referred to as an M unit, a siloxane unit of a formula ($R_2SiO_{2/2}$), also commonly referred to as a D unit, a siloxane unit of a formula ($RSiO_{3/2}$), also commonly referred to as a T unit, and a siloxane unit of a formula ($SiO_{4/2}$), also commonly referred to as a Q unit. R present in the M, D and T units is a functional group bonded to silicon, an example of which includes hydrogen, a hydroxy group, a monovalent hydrocarbon group (e.g., an alkyl group, a haloalkyl group, an alkenyl group, an aryl group and/or an aralkyl group, etc.), and an alkoxy group, and the like.

The alkyl group, haloalkyl group, and alkoxy group may be an alkyl group, haloalkyl group, and alkoxy group with 1 to 20 carbon atoms, 1 to 16 carbon atoms, 1 to 12 carbon atoms, 1 to 8 carbon atoms, or 1 to 4 carbon atoms, respectively. The alkyl group, haloalkyl group, and alkoxy group may be linear, branched, or cyclic, and may be substituted with one or more substituents, if necessary.

The aryl group may be an aryl group with 6 to 30 carbon atoms, 6 to 24 carbon atoms, 6 to 18 carbon atoms, or 6 to 12 carbon atoms, and an example thereof includes a phenyl group, a tolyl group, a xylyl group, or a naphthyl group, and the like, but is not limited thereto.

The aralkyl group may be an aralkyl group with 7 to 35 carbon atoms, 7 to 29 carbon atoms, 7 to 23 carbon atoms, or 7 to 17 carbon atoms; and an example thereof includes a benzyl group or a phenentyl group, but is not limited thereto.

The specific types of the alkenyl group are described below.

In order that the composition has appropriate foamability and effectively forms the desired foam sheet, the polyorganosiloxane component may be adjusted. For example, the polyorganosiloxane component may contain at least a siloxane unit containing hydrogen bonded to silicon (silicon-bonded hydrogen), a siloxane unit containing a hydroxy group bonded to silicon (silicon-bonded hydroxy group), and a siloxane unit containing an alkenyl group bonded to silicon (silicon-bonded alkenyl group), or may comprise polyorganosiloxanes having the siloxane units. When the units are contained in the polyorganosiloxane, a single molecule of the polyorganosiloxane may also contain all the siloxane units, or two or more types of polyorganosiloxanes containing at least one of the siloxane units may also be mixed to form the polyorganosiloxane component.

The alkenyl group may be an alkenyl group with 2 to 20 carbon atoms, 2 to 16 carbon atoms, 2 to 12 carbon atoms, 2 to 8 carbon atoms, or 2 to 4 carbon atoms, such as a vinyl group or an allyl group. The alkenyl group may be linear, branched, or cyclic, and may be substituted with one or more substituents, if necessary.

If the polyorganosiloxane component is applied to a foaming process to be described below, a reaction (first reaction) in which a so-called siloxane bond is formed by a reaction of the silicon atom-bonded hydroxy group with the silicon atom-bonded hydrogen atom; and a so-called addition reaction (hydrosilylation) (second reaction) between the silicon atom-bonded hydrogen atom and the silicon atom-bonded alkenyl group occur. During the first reaction, hydrogen gas ($H_2$) is generated, and pores are formed within the polymer or crosslinked network formed by the first and second reactions while this hydrogen gas acts as a blowing agent, whereby a foam sheet may be produced. The desired foam sheet may be obtained by inducing the reaction of such a mechanism in the presence of a specific inorganic hydrate.

To achieve the effect, the composition of the polyorganosiloxane component may be adjusted.

For example, the polyorganosiloxanes included in the polyorganosiloxane component may be present such that OH/H of Equation 1 below is within a predetermined range.

[Equation 1]

$$OH/H$$

In Equation 1, H is the total mole number of the silicon-bonded hydrogen contained in the polyorganosiloxane component, and OH is the total mole number of silicon-bonded hydroxy groups contained in the polyorganosiloxane component.

The lower limit of OH/H in Equation 1 above may be 0.01, 0.03, 0.05, 0.07, 0.09, 0.1, 0.3, 0.5, 0.7, 0.9, 1, 1.01, 1.02, 1.03, 1.04, 1.05, 1.06, or 1.07 or so, and the upper limit thereof may be 10, 9, 8, 7, 6, 5, 4.5, 4, 3.5, 3, 2.5, 2, 1.5, 1.4, 1.3, 1.2, 1.1, 1.0, 0.8, or 0.6 or so. The OH/H may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

For example, the polyorganosiloxanes included in the polyorganosiloxane component may be present such that H/V in Equation 2 below is within a predetermined range.

[Equation 2]

$$H/V$$

In Equation 2, H represents the total mole number of the silicon-bonded hydrogen contained in the polyorganosiloxane component, and V represents the total mole number of silicon-bonded alkenyl groups contained in the polyorganosiloxane component.

The lower limit of H/V in Equation 2 above may be 50, 80, 85, 90, 95, 100, 105, 110, 115, 120, 125, 130, 135, 150, 200, 220, 240, 260, 280, or 285 or so, and the upper limit thereof may be 600, 550, 500, 450, 400, 380, 360, 340, 320, 300, 290, 280, 260, 240, 220, 200, 195, 190, 185, 180, 175, 170, 165, 160, 155, 150, 145, or 140 or so. The H/V may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

For example, the polyorganosiloxanes included in the polyorganosiloxane component may be present such that OH/(H+V) in Equation 3 below is within a predetermined range.

[Equation 3]

$$OH/(H+V)$$

In Equation 3, H is the total mole number of the silicon-bonded hydrogen contained in the polyorganosiloxane component, OH is the total mole number of the silicon-bonded hydroxy groups contained in the polyorganosiloxane component, and V is the total mole number of the silicon-bonded alkenyl groups contained in the polyorganosiloxane component.

The lower limit of OH/(V+H) in Equation 3 may be 0.01, 0.05, 0.1, 0.3, 0.4, 0.45, 0.5, 0.7, 0.9, 1, 1.01, 1.02, 1.03, 1.04, 1.05, 1.06, or 1.07 or so, and the upper limit thereof may be 10, 9, 8, 7, 6, 5, 4.5, 4, 3.5, 3, 2.5, 2, 1.5, 1.4, 1.3, 1.2, 1.1, 1.0, 0.8, or 0.6 or so. The OH/(V+H) may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

By composing the polyorganosiloxane component so that the OH/H, H/V, and OH/(V+H) of Equations 1 to 3 above are within the predetermined ranges, the formation of polymer chains and the generation of foaming gas ($H_2$) by the first reaction, and the crosslinking by the second reaction during the foaming process may proceed to be suitable for the formation of the desired foam sheet. The desired foam sheet may be obtained by inducing such a process in the presence of a specific inorganic hydrate.

The amount of silicon-bonded hydroxy groups in the polyorganosiloxane component may be controlled. For example, the lower limit of the amount of hydroxy groups in the polyorganosiloxane component may be 0.01 mmol/g, 0.05 mmol/g, 0.1 mmol/g, 0.5 mmol/g, 1 mmol/g, 1.1 mmol/g, 1.11 mmol/g, 1.12 mmol/g, 1.13 mmol/g, 1.14 mmol/g, or 1.15 mmol/g or so, and the upper limit thereof may be 5 mmol/g, 4.5 mmol/g, 4 mmol/g, 3.5 mmol/g, 3 mmol/g, 2.5 mmol/g, 2 mmol/g, 1.9 mmol/g, 1.8 mmol/g, 1.7 mmol/g, 1.6 mmol/g, 1.5 mmol/g, 1.4 mmol/g, 1.3 mmol/g, or 1.2 mmol/g or so. The content of the hydroxy group may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The type of detailed polyorganosiloxanes applicable to form the polyorganosiloxane component is not particularly limited. For example, after obtaining appropriate types of polyorganosiloxanes from a polyorganosiloxane supplier in the industry, the polyorganosiloxane component may be prepared by mixing them so that the OH/H, H/V, and OH/(V+H) of Equations 1 to 3 above have ratios within the above-described ranges.

The lower limit of the content of the polyorganosiloxane component in the composition may be 30 weight%, 35 weight%, 40 weight%, 45 weight%, 50 weight%, 52 weight%, 54 weight%, 55 weight%, 58 weight%, or 60 weight% or so, and the upper limit thereof may be 90 weight%, 85 weight%, 80 weight%, 75 weight%, 70 weight%, 65 weight%, or 60 weight% or so. The content may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The content is a content based on the solid content of the composition. For example, when the foamable composition includes a solvent, the content is a ratio based on the total of the components of the foamable composition excluding the solvent.

The foamable composition may comprise an inorganic hydrate together with the polyorganosiloxane component. This inorganic hydrate may have endothermic characteristics, and thus impart heat or flame-controlling performance to the foam sheet.

The desired foam sheet may be obtained by applying an inorganic hydrate containing crystal water in a specific ratio and having a crystalline form capable of retaining that crystal water as the inorganic hydrate, and proceeding with the reaction and foaming of the polyorganosiloxane component in the presence of this inorganic hydrate.

Such an inorganic hydrate may be represented, for example, by Formula 1 below:

[Formula 1]     $M_r X_s \cdot n H_2 O$

In Formula 1, M is a metal cation, X is an anion, and r, s, and n are each an arbitrary number.

In Formula 1, M is a metal cation. The M may be one metal or two or more metals. The M is, for example, a cation of a metal belonging to Groups 1 to 13 of the periodic table, which may be a metal cation formed by one, or two or more metals selected from the metals belonging to Groups 1 to 13 above. For example, the M may be a metal cation formed by one, or two or more metals selected from the metals belonging to Groups 1, 2, 12, and 13 of the periodic table.

The one, or two or more metals forming the M may be metals belonging to Periods 2 to 6 of the periodic table while belonging to the above-described Groups of the periodic table. For example, the M may be cations of one, or two or more metals belonging to Periods 2 to 6, Periods 2 to 4, or Periods 2 to 3 of the periodic table while belonging to Groups of the periodic table.

An example of the metals may be one or more selected from the group consisting of Li, K, Al, Mn, Ca, Na, Zn, Fe, Ba, Mg, and Sr, but is not limited thereto.

The type of metal ion may be selected to exhibit crystallinity for forming the desired foam sheet and to maintain crystal water.

For example, M in Formula 1 above may be one or more selected from the group consisting of alkali metal ions, alkaline earth metal ions, post-transition metal ions, and metalloid ions, and more preferably, may be two or more selected from the foregoing. Particularly preferably, M in Formula 1 above may include alkali metal ions and post-transition metal ions together.

The type of the alkali metal may be exemplified by Li, Na, K, Rb, Cs, and/or Fr, and the like, the type of the alkaline earth metal may be exemplified by Be, Mg, Ca, Sr, Ba, and/or Ra, and the like, the type of the post-transition metal may be exemplified by Al, Ga, In, and/or Tl, and the like, and the type of the metalloid may be exemplified by B, Si, Ge, As, Sb, and/or Te, and the like, without being limited thereto.

As the M, cations of metals belonging to one, or two or more periods selected from the group consisting of Periods 2, 3, and 4 of the periodic table may be applied.

In Formula 1, X is an anion, and the specific type is not particularly limited. For example, X may be one or more selected from the group consisting of halogen anions (e.g., $F^-$, $Cl^-$, and/or $Br^-$, etc.), $ClO_3^-$, $OH^-$, $HPO_4^{2-}$, $NO_3^-$, $SO_4^{2-}$, $S_2O_3^{2-}$, and $CH_3O_2^-$, but is not limited thereto.

In Formula 1, r and s are numbers determined according to the types of the metal cation and the anion.

For example, r and s may be numbers satisfying an equation $p \times r = q \times s$. Here, p is the oxidation number (charge number) of the metal cation. For example, when two or more metal ions are used as the M, the p is the sum of values obtained by multiplying the oxidation number (charge number) of each metal ion by the mole number of the relevant metal ion. Here, q is the oxidation number (charge number) of the anion. For example, when two or more anions are used as the X, the q is the sum of values obtained by multiplying the oxidation number (charge number) of each anion by the mole number of the relevant anion.

The specific ranges of the r and s are not particularly limited if they are selected to satisfy the equation. For example, the r is a number within a range of 1 to 3, which may be, for example, 1, 2, or 3, and the s is a number within a range of 1 to 3, which may be, for example, 1, 2, or 3.

In Formula 1, n is the mole number of water molecules (crystal water) present in the hydrate, where the lower limit thereof may be 8, 9, 10, 11, or 12 or so, and the upper limit thereof may be 20, 19, 18, 17, 16, 15, 14, 13, 12, 11, 10, 9, or 8 or so. The above n may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The amount of crystal water contained in the hydrate is influenced by the crystal structure of the hydrate. The hydrate having a crystal structure in which n falls within the range contributes to the formation of the desired foam sheet.

The inorganic hydrate may have a particle diameter in an appropriate level. Through adjustment of the particle diameter, it is possible to adjust the viscosity of the foamable composition, and it is possible to secure an appropriate foaming efficiency.

For example, the lower limit of a so-called D50 particle diameter of the inorganic hydrate may be 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, 8.5 $\mu$m, 9 $\mu$m, 9.5 $\mu$m, or 10 $\mu$m or so, and the upper limit thereof may be 500 $\mu$m, 450 $\mu$m, 400 $\mu$m, 350 $\mu$m, 300 $\mu$m, 250 $\mu$m, 200 $\mu$m, 150 $\mu$m, 100 $\mu$m, 95 $\mu$m, 90 $\mu$m, 85 $\mu$m, 80 $\mu$m, 75 $\mu$m, 70 $\mu$m, 65 $\mu$m, 60 $\mu$m, 55 $\mu$m, 50 $\mu$m, 45 $\mu$m, 40 $\mu$m, 35 $\mu$m, 30 $\mu$m, 25 $\mu$m, 20 $\mu$m, 15 $\mu$m, or 10 $\mu$m or so. The D50 particle diameter may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The D50 particle diameter is an average particle diameter measured in the manner described in "2. Average particle diameter" section of Example sections in the present specification.

The content of the inorganic hydrate may be adjusted according to the purpose. For example, the lower limit of the content of the inorganic hydrate based on 100 parts by weight of the polyorganosiloxane component may be 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, or 15 parts by weight or so, and the upper limit thereof may be 30 parts by weight, 28 parts by weight, 26 parts by weight, 24 parts by weight, 22 parts by weight, 20 parts by weight, 18 parts by weight, 16 parts by weight, 14 parts by weight, 12 parts by weight, 10 parts by weight, 8 parts by weight, 6 parts by weight, 4 parts by weight, or 3 parts by weight or so. The content may be within a range of more than or equal to, or more than any lower limit arbitrarily selected from among the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The foamable composition may further comprise a flame retardant, for example, flame-retardant particles. Through application of the flame-retardant particles, it is possible to secure flame retardancy.

As the flame retardant, an inorganic flame retardant may be used, and for example, one or more selected from the group consisting of a metal hydroxide such as aluminum hydroxide or magnesium hydroxide, antimony oxide (trioxide, tetroxide), zinc stannate, a phosphorus product, guanidine, molybdate, and zirconium, and the like may be used, but is not limited thereto.

The size of the flame retardant may be controlled for impartment of appropriate flame retardancy in the foam sheet, processability during the foaming process, and the like.

For example, the lower limit of the D50 particle diameter of the flame retardant may be 1 $\mu$m, 5 $\mu$m, 10 $\mu$m, 15 $\mu$m, 20 $\mu$m, or 25 $\mu$m or so, and the upper limit thereof may be 150 $\mu$m, 100 $\mu$m, 90 $\mu$m, 80 $\mu$m, 70 $\mu$m, 60 $\mu$m, 50 $\mu$m, 40 $\mu$m, or 30 $\mu$m or so. The D50 particle diameter may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. Here, the D50 particle diameter is an average particle size measured in the manner described in "2. Average particle size" section of Example sections in the present specification.

In the foamable composition, the lower limit of the content of the flame retardant based on 100 parts by weight of the polyorganosiloxane component may be 5 parts by weight, 10 parts by weight, 15 parts by weight, 20 parts by weight, 25 parts by weight, 30 parts by weight, 35 parts by weight, 40 parts by weight, 45 parts by weight, 50 parts by weight, 55 parts by weight, or 60 parts by weight or so, and the upper limit thereof may be 500 parts by weight, 450 parts by weight, 400 parts by weight, 350 parts by weight, 300 parts by weight, 250 parts by weight, 200 parts by weight, 150 parts by weight, 100 parts by weight, 90 parts by weight, 80 parts by weight, 70 parts by weight, or 60 parts by weight or so. The ratio may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The foamable composition may comprise inorganic particles different from the inorganic hydrate and flame retardant as described above, in consideration of other functionalities such as viscosity adjustment, and may comprise, for example, silica.

As the inorganic particles, particles with an appropriate size may be used, in consideration of the purpose. For example, the lower limit of the D50 particle diameter of the inorganic particles may be 1 nm, 5 nm, 10 nm, 15 nm, 20 nm, 25 nm, 30 nm, 35 nm, 40 nm, 45 nm, or 50 nm or so, and the upper limit thereof may be 1,000 nm, 900 nm, 800 nm, 700 nm, 600 nm, 500 nm, 400 nm, 300 nm, 200 nm, 100 nm, 90 nm, 80 nm, 70 nm, 60 nm, or 55 nm or so. The D50 particle diameter may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. Here, the D50 particle diameter is an average particle diameter measured in the manner described in "2. Average particle size" section of Example sections in this specification.

In the foamable composition, the lower limit of the weight ratio of the inorganic particles based on 100 parts by weight of the polyorganosiloxane component may be 0.1 parts by weight, 0.5 parts by weight, 1 part by weight, 1.5 parts by weight, 2 parts by weight, or 2.5 parts by weight or so, and the upper limit thereof may be 50 parts by weight, 45 parts by weight, 40 parts by weight, 35 parts by weight, 30 parts by weight, 25 parts by weight, 20 parts by weight, 15 parts by weight, 10 parts by weight, 9 parts by weight, 8 parts by weight, 7 parts by weight, 6 parts by weight, 5 parts by weight, 4 parts by weight, or 3 parts by weight or so. The ratio may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The foamable composition may comprise any additives necessary in addition to the above-described components. For example, the foamable composition may comprise a catalyst for promoting the first and/or second reaction of the polyorganosiloxane component. For example, a so-called addition reaction catalyst is used as the catalyst for the second reaction, and a representative example thereof includes a platinum-based catalyst, but the type of catalyst that may be included in the foamable composition is not limited to the foregoing. When the catalyst is applied, its content is not limited, and it may be used in a catalytic amount according to known information.

The foamable composition may further comprise an appropriate additive in addition to the catalyst.

In one example, the composition may not substantially contain a substance known as the so-called blowing agent for forming the desired foam sheet. That is, the foam sheet may be foamed and cured in the presence of the inorganic hydrate through hydrogen generated by the reaction of the above-described polyorganosiloxane component in the substantially absence of a separate blowing agent, thereby forming the desired foam sheet. For example, the upper limit of the content of the blowing agent based on the total weight of the composition may be about 10 weight%, 8 weight%, 6 weight%, 4 weight%, 2 weight%, 1 weight%, 0.5 weight%, 0.1 weight%, 0.05 weight%, 0.01 weight%, 0.005 weight%, 0.001 weight%, 0.0005 weight%, or 0.0001 weight% or so, and the lower limit thereof may be 0 weight% or so. When the composition does not substantially contain the blowing agent, the content of the blowing agent may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The content is a content based on the solid content of the composition. For example, when the foamable composition includes a solvent, the content is a ratio based on the total sum of the components of the foamable composition excluding the solvent.

The type of the blowing agent includes publicly known ingredients known in the industry to be capable of foaming a polyorganosiloxane component. When such an ingredient is included in a form or amount capable of foaming the polyorganosiloxane component, the composition may be evaluated as containing a blowing agent.

The viscosity of the foamable composition may be adjusted in consideration of processability in a foaming process to be described below. For example, the lower limit of the viscosity of the foamable composition may be 30,000 cps, 35,000 cps, 40,000 cps, 45,000 cps, 50,000 cps, 55,000 cps, 60,000 cps, 65,000 cps, 70,000 cps, 75,000 cps, 80,000 cps, 85,000 cps, 90,000 cps, or 95,000 cps or so, and the upper limit thereof may be 1,000,000 cps, 900,000 cps, 800,000 cps, 700,000 cps, 600,000 cps, 500,000 cps, 400,000 cps, 300,000 cps, 200,000 cps, 100,000 cps, 90,000 cps, 80,000 cps, 70,000 cps, 60,000 cps, or 50,000 cps or so. The viscosity may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. The viscosity is measured according to "1. Viscosity measurement" section of Example sections in the present specification, which is a viscosity at 25°C and a shear rate condition of 1/sec.

The present specification also discloses a foam sheet. The foam sheet is a layer, film, or sheet comprising one or more pores.

Such a foam sheet may comprise a polyorganosiloxane matrix and an inorganic hydrate dispersed within the matrix.

The polyorganosiloxane matrix may be a binder maintaining the shape of the foam sheet, and may be in the form of a porous film, sheet, or layer. Such a polyorganosiloxane matrix may comprise one or more pores therein.

The foam sheet may also comprise an inorganic hydrate dispersed within the polyorganosiloxane matrix.

The foam sheet may be formed by foaming and curing the above-described foamable composition in a manner to be described below. Therefore, the polyorganosiloxane matrix may comprise the above-described polyorganosiloxane component, or may comprise a reactant thereof. For example, the polyorganosiloxane matrix may be the above-described polyorganosiloxane component, or may be a reactant thereof.

In addition, the inorganic hydrate may also be an inorganic hydrate included in the above-described foamable composition, the specific type, size, and content thereof are as described above, and regarding the content, the content in the foamable composition may be applied equally, by replacing the polyorganosiloxane component, which serves as the basis for the weight ratio, with the polyorganosiloxane matrix. Such an inorganic hydrate may also be included in the foam sheet in a state where the pre-foamed form is maintained, and may also be included in the foam sheet in a state where some crystal water is lost, or the like.

The previously described flame retardant and inorganic particles (such as silica), and the like may also be included in the foam sheet. The specific types, sizes, and contents of the flame retardant and inorganic particles are as described above, and regarding the content, the content in the foamable composition may be applied equally, by replacing the polyorganosiloxane component, which serves as the basis for the weight ratio, with the polyorganosiloxane matrix.

Such foam sheets may have excellent flame retardancy. Generally, it is not easy for the foam sheet to secure endothermic characteristics and flame retardancy, but according to the disclosure of the present specification, it is possible to provide a foam sheet having excellent flame retardancy, and having endothermic characteristics by the inorganic hydrate. Particularly, the flame retardancy as above, and the like can be secured even in a state where the foam sheet maintains a low density or specific gravity.

For example, the foam sheet may have a flame-retardant rating of V1 or V0 according to the Vertical Burning Test standard of UL 94. Such a flame-retardant rating may be evaluated in a manner of "3. Flame retardancy" section of Example sections in this specification.

The foam sheet may have low-density characteristics. For example, the upper limit of the density of the foam sheet may be 0.5 g/cm$^3$, 0.45 g/cm$^3$, 0.4 g/cm$^3$, 0.35 g/cm$^3$, or 0.3 g/cm$^3$ or so, and the lower limit thereof may be 0.1 g/cm$^3$, 0.15 g/cm$^3$, 0.2 g/cm$^3$, or 0.25 g/cm$^3$ or so. The density may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The foam sheet may be formed by foaming the above-described foamable composition. Therefore, the foam sheet may be a foamed product of the foamable composition, or may comprise a foamed product thereof.

The thickness of the foam sheet may be adjusted in consideration of the purpose. For example, the lower limit of the thickness of the foam sheet may be 0.5 mm, 1 mm, 1.5 mm, 2 mm, 2.5 mm, 3 mm, 3.5 mm, 4 mm, 4.5 mm, or 5 mm or so, and the upper limit thereof may be 100 mm, 95 mm, 90 mm, 85 mm, 80 mm, 75 mm, 70 mm, 65 mm, 60 mm, 55 mm, 50 mm, 45 mm, 40 mm, 35 mm, 30 mm, 25 mm, 20 mm, 15 mm, 10 mm, 9 mm, 8 mm, 7 mm, 6 mm, or 5 mm or so. The thickness may be within a range of more than or equal to, or more than any lower limit arbitrarily selected from the above-listed lower limits; within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The method for producing the foam sheet by foaming the above-described foamable composition is not particularly limited. For example, the foaming may be performed by forming the foamable composition into a required shape (e.g., forming it in the form of a layer by coating, etc.), and applying heat to the foamable composition. In this case, the foam sheet may be formed while the generation of foaming gas (H$_2$) by the first reaction and the curing process by the first and second reactions are performed.

The lower limit of the temperature at which the foaming process is performed may be, for example, 30°C, 35°C, 40°C, 45°C, 50°C, 55°C, 60°C, 65°C, 70°C, 75°C, or 80°C or so, and the upper limit thereof may be 300°C, 250°C, 200°C, 150°C, 100°C, 95°C, 90°C, 85°C, or 80°C or so. The foaming process may be performed by maintaining the foamable composition at a temperature within a range of more than or equal to, or more than any lower limit arbitrarily selected from the above-listed lower limits; or a temperature within a range of less than or equal to, or less than any upper limit arbitrarily selected from the above-listed upper limits; or a temperature within a range of less than or equal to, or less than any upper limit arbitrarily selected from the above-listed upper limits while being more than or equal to, or more than any lower limit arbitrarily selected from the above-listed lower limits.

The time for performing the foaming process may be adjusted in consideration of a desired foaming magnification ratio, and the like. Usually, the longer the time for the foaming process, the higher the foaming magnification ratio may be. The foaming magnification ratio is a ratio (thickness ratio in the case of the same area) of the volume of the foamable composition after the foaming process to the volume of the foamable composition before the foaming process. The lower limit of the foaming magnification ratio may be, for example, 1.2 times, 1.5 times, 2 times, 2.5 times, 3 times, 3.5 times, 4 times, 4.5 times, 5 times, 5.5 times, or 6 times or so, and the upper limit thereof may be 30 times, 25 times, 20 times, 15 times, 10 times, 9 times, 8 times, 7 times, 6 times, 5 times, or 4 times or so. The foaming magnification ratio may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The present specification also discloses a product (heat-generating product) comprising the foamable composition or foam sheet. The composition or foam sheet may be usefully applied as a material for controlling heat of a heat-generating component, a heat-generating element, or a heat-generating product. Therefore, the product may comprise a heat-generating component, a heat-generating element, or a heat-generating product. The heat-generating component, element, or product means a component, element, or product generating heat during a using process, and the type thereof is not particularly limited. Representative heat-generating components, elements, or products include various electrical/-electronic products, including battery cells, battery modules, or battery packs, and the like.

The composition or foam sheet is particularly applied to a product formed by integrating multiple heat-generating components, heat-generating elements, or heat-generating products, so that when abnormal heat generation or explosion occurs in any one of the multiple heat-generating components, heat-generating elements, or heat-generating products, it can be effectively used for suppressing or preventing a phenomenon in which the heat due to the heat generation and the flame due to the explosion propagate to other adjacent heat-generating components, heat-generating elements, or heat-generating products, and thus chain heat generation or explosion occurs.

For example, a product to which the composition or foam sheet is applied may be a battery module.

Therefore, the present specification discloses a battery module comprising the foam sheet or the foamable composition. Such a battery module comprises a plurality of battery cells, wherein the foam sheet or foamable composition may be present between at least some of the plurality of battery cells.

If the composition or foam sheet is applied, the specific constitutions of the battery module, such as the type or arrangement method of the battery cells, or the like is not particularly limited, and any known type or method may be applied.

**Advantageous Effects**

The present specification discloses a composition and a use thereof. The composition may form a low-density layer, sheet or film having excellent delay or prevention characteristics against heat and flames, and excellent flame retardancy. Such a layer, sheet or film may be referred to as a foam sheet. The present specification also discloses the composition or the foam sheet. For example, the composition or the foam sheet is applied to a product formed by integrating a plurality of elements, whereby it is possible to effectively respond to heat or flames generated from the elements while uniformly maintaining the temperature of the product. For example, the composition or the foam sheet is applied to the product, whereby even when abnormal heat generation, explosion, or ignition occurs in one of the plurality of elements, it is possible to prevent or minimize the influence of such heat generation, explosion, or ignition on other adjacent elements.

**Mode for Invention**

Hereinafter, the foamable composition, and the like will be described in detail through examples and comparative examples, but the scope of the foamable composition, and the like is not limited by the following contents.

**1. Viscosity measurement**

A viscosity was measured using a viscometer (Brookfield, Brookfield DV2) and a CPA-52Z spindle. The spindle was selected depending on a viscosity range to be measured. After zero-adjusting the viscometer, the spindle was mounted on a spindle connection part, a plate was mounted on a plate connection part, and then an adjustment lever was adjusted so that a constant separation space (gap) occurred between the spindle and the plate. The plate was separated, a sample was applied in an amount of 0.5 mL to the center of the separated plate, and then the plate coated with the curable composition was mounted to the plate connection part, and after waiting until a torque value reached zero, the viscosity was measured at a temperature of about 25°C. The viscosity was measured while rotating the spindle, in consideration of a shear rate, and the viscosity at a shear rate of 1/sec was measured. The viscosity was stabilized by maintaining the determined rotation speed for about 1 minute or so, and then the viscosity was measured.

**2. Average particle diameter**

An average particle diameter was measured using a Marvern MASTERSIZER3000 device in compliance with ISO-13320 standard. Distilled water was used as a solvent. The particle diameter can be obtained by irradiating particles dispersed in the solvent with lasers using the device, and analyzing intensity and directionality values of the lasers scattered and/or reflected by the particles using a Mie theory. The average particle diameter can be obtained by obtaining a volume-based particle size distribution through conversion to the diameter of the sphere with the same volume as the dispersed filler through the analysis, and obtaining a D50 particle diameter (particle diameter at 50% of the cumulative volume) as a median value of the distribution therethrough.

**3. Flame retardancy**

Flame retardancy was identified according to the Vertical Burning Test of UL 94 standard. Flame retardancy was evaluated using a specimen in which foam sheets produced in examples or comparative examples were each cut to be in the form of a bar with a thickness of about 1.4 mm or so, a horizontal length of about 13 mm or so, and a vertical length of about 125 mm or so. The flame retardancy evaluation was conducted by preparing three specimens for each identical foam sheet and evaluating these specimens.

According to the Vertical Burning Test standard of UL 94, the combustion time (t1) of the specimen was measured while contacting one end of the bar-shaped specimen with a flame of 20 mm height for about 10 seconds, and the combustion pattern was recorded. Subsequently, while the specimen was contacted with the flame again for 10 seconds, and the combustion time (t2) and the spark glowing time (t3) of the specimen were measured, and the combustion pattern was recorded. For three specimens manufactured using the same foam sheet, the t1, t2, and t3 were obtained respectively, and the averages of the three obtained values were used as the final t1, t2, and t3 values. In the Vertical Burning Test standard of UL 94, the flame retardancy rating is evaluated on the following criteria according to the times t1, t2, and t3, and in this specification, the flame retardancy rating is also evaluated according to the criteria in Table 1 below.

[Table 1]

|  | V0 | V1 | V2 |
|---|---|---|---|
| Value of time t1 or t2 | 10sec or less | 30sec or less | 30sec or less |
| Sum of times t1 and t2 | 50sec or less | 250sec or less | 250sec or less |
| Sum of times t2 and t3 | 30sec or less | 60sec or less | 60sec or less |
| Combustion until holding clamp (125mm mark) | No | No | No |
| Ignition of cotton wool due to dripping | No | No | Yes |

**4. Density measurement**

A density of a foam sheet was measured using a measuring device (Alfa Mirage MD-300S).

**Example 1.**

A polyorganosiloxane component was prepared by mixing a first polyorganosiloxane ($S_1$) having a silicon-bonded hydroxy group, a second polyorganosiloxane ($S_2$) having a silicon-bonded hydroxy group, a third polyorgano-siloxane ($S_3$) having a silicon-bonded hydroxy group, a fourth polyorganosiloxane ($S_4$) having a silicon-bonded vinyl group, a fifth polyorganosiloxane ($S_5$) having a silicon-bonded vinyl group, and a sixth polyorganosiloxane ($S_6$) having silicon-bonded hydrogen in a weight ratio of 19:21.5:19:8.5:23.5:8.5 ($S_1$: $S_2$: $S_3$: $S_4$: $S_5$: $S_6$).

As the first, third, fifth, and sixth polyorganosiloxanes, materials having the equivalents and viscosities shown in Table 1 below were obtained from HRS Silicone, and used, and as the second and fourth polyorganosiloxanes materials having the equivalents and viscosities shown in Table 1 below were obtained from Gelest Inc., and used.

The mixing was performed using a planetary mixer (Thinky Mixer) at a condition of 750 rpm for 2 minutes. The equivalent ratios and viscosities of the six polyorganosiloxanes are as shown in Table 2 below. The equivalent ratios in Table 2 below are information provided by the manufacturer, where in the case of the polyorganosiloxane having a silicon-bonded hydroxy group, it is the mole number of the hydroxy group contained per g of the polyorganosiloxane, in the case of the polyorganosiloxane having a silicon-bonded vinyl group, it is the mole number of the vinyl group contained per g of the polyorganosiloxane, and in the case of the polyorganosiloxane having silicon-bonded hydrogen, it is the mole number of the hydrogen contained per g of the polyorganosiloxane.

[Table 2]

|  | Equivalent (mmol/g) | Viscosity (cps) |
|---|---|---|
| First polyorganosiloxane | 3.5 | 150 or less |
| Second polyorganosiloxane | 0.08 | 4,000 |
| Third polyorganosiloxane | 0.003 | 8,000 |
| Fourth polyorganosiloxane | 0.04 | 10,000 |
| Fifth polyorganosiloxane | 0.005 | 70,000 |
| Sixth polyorganosiloxane | 15.5 | 100 or less |

When calculating based on the equivalent weight and mixing weight ratio of the polyorganosiloxane component formed by the formulation, OH/H of Equation 1 below was about 0.52 or so, H/V of Equation 2 below was about 288 or so, OH/(V+H) of Equation 3 below was about 0.52 or so, and the content of silicon-bonded hydroxy groups in the polyorganosiloxane component was about 1.15 mmol/g or so.

$$[\text{Equation 1}]$$

$$OH/H$$

$$[\text{Equation 2}]$$

$$H/V$$

$$[\text{Equation 3}]$$

$$OH/(H+V)$$

In Equations 1 to 3, H is the total mole number of hydrogen contained in the prepared polyorganosiloxane component, OH is the total mole number of hydroxy groups contained in the prepared polyorganosiloxane component, and V is the total mole number of alkenyl groups contained in the prepared polyorganosiloxane component.

Subsequently, the polyorganosiloxane component was mixed with an inorganic hydrate, silica, and flame-retardant particles. The mixing was performed such that the weight ratio (A: B: C: D) of the polyorganosiloxane component (A), flame-retardant particles (B), silica (C), and inorganic hydrate (D) was 100:60:2.5:15 or so.

As the inorganic hydrate (IH), $KAl(SO_4)_2 \cdot 12H_2O$ with a D50 particle diameter of about 10 $\mu$m or so was used, as the silica, silica (Evonik, Aerosil R972) with a D50 particle diameter of about 50 nm was used, and as the flame-retardant particles, aluminum hydroxide (Chalco, H-WF-25SP) with a D50 particle diameter of about 25 $\mu$m or so was used.

The mixing was performed using a planetary mixer (Thinky Mixer) at a condition of 750 rpm for 2 minutes.

The viscosity of the obtained composition (foamable composition) was about 98,000 cps or so at room temperature (about 25°C) and a shear rate condition of 1/sec.

A catalyst (DY Silicone PTC-350-1) was further introduced to the foamable composition at a ratio of 0.05 parts by weight relative to 100 parts by weight of the polyorganosiloxane component, and the mixture was mixed using a planetary mixer (Thinky Mixer) at a condition of 750 rpm for 1 minute.

The foamable composition with the added catalyst was coated onto a release layer of a release-treated PET (poly(ethylene terephthalate)) film to a thickness of about 0.8 mm, a release layer of another release-treated PET (poly(ethylene terephthalate)) film was laminated onto the layer of the coated foamable composition, and then cured and foamed in a hot air oven at about 80°C, thereby producing a foam sheet with a thickness of about 5.0 mm.

**Example 2.**

A foam sheet was produced in the same manner as in Example 1, except that the foamable composition was prepared so that the weight ratio of the polyorganosiloxane component (S), flame-retardant particles (A), silica particles (B), platinum catalyst (C), and inorganic hydrate (D) was 100:60:2.5:0.05:10 (S: A: B: C: D).

The viscosity of the foamable composition was about 76,000 cps or so at 25°C and a shear rate of 1/sec.

**Example 3.**

A foam sheet was produced in the same manner as in Example 1, except that the weight ratio of the polyorganosiloxane component (S), flame-retardant particles (A), silica particles (B), platinum catalyst (C), and inorganic hydrate (D) was 100:60:2.5:0.05:5 (S: A: B: C: D).

The viscosity of the applied foamable composition was about 52,000 cps or so at 25°C and a shear rate of 1/sec.

**Example 4.**

A foam sheet was produced in the same manner as in Example 1, except that the weight ratio of the polyorganosiloxane component (S), flame-retardant particles (A), silica particles (B), platinum catalyst (C), and inorganic hydrate (D) in the foamable composition was 100:60:2.5:0.05:2.5 (S: A: B: C: D). The viscosity of the applied foamable composition was about 43,000 cps or so at 25°C and a shear rate of 1/sec.

**Example 5.**

A foam sheet was produced in the same manner as in Example 1, except that through the time control of the curing and foaming, the foam sheet had a thickness of 2.8 mm.

**Example 6.**

A foam sheet with a thickness of about 2.8 mm or so was produced in the same manner as in Example 5, except that the foamable composition of Example 2 was used.

**Example 7.**

A foam sheet with a thickness of about 2.8 mm or so was produced in the same manner as in Example 5, except that the foamable composition of Example 3 was used.

**Example 8.**

A foam sheet with a thickness of about 2.8 mm or so was produced in the same manner as in Example 5, except that the foamable composition of Example 4 was used.

**Comparative Example 1.**

A foam sheet was prepared in the same manner as in Example 1, except that the inorganic hydrate was not applied. The viscosity of the applied foamable composition was about 39,000 cps or so at 25°C and a shear rate of 1/sec.

**Comparative Example 2.**

A foamable composition was prepared and a foam sheet was produced, in the same manner as in Example 1, except that $2ZnO3B_2O_3 \cdot 3.5H_2O$ was used instead of $KAl(SO_4)_2 \cdot 12H_2O$ as the inorganic hydrate.

**Comparative Example 3.**

A foamable composition was prepared in the same manner as in Example 1, except that $AlCl_3 \cdot 6H_2O$ was used instead of $KAl(SO_4)_2 \cdot 12H_2O$ as the inorganic hydrate. The foaming process was performed in the same manner as in Example 1 using the foamable composition, but the curing and foaming processes did not proceed smoothly, and a foam sheet could not be formed.

**Comparative Example 4.**

An attempt was made to prepare a foamable composition in the same manner as in Example 1, except that $Na_2S \cdot 5H_2O$ was used instead of $KAl(SO_4)_2 \cdot 12H_2O$ as the inorganic hydrate, but some curing and foaming occurred during the formulation process, so that the foamable composition and foam sheet could not be formed appropriately.

The measurement results for Examples and Comparative Examples (excluding Comparative Examples 3 and 4) were summarized in Table 3 below. In Table 3, the coating thickness is the layer thickness of the foamable composition coated on the release-treated PET film before curing and foaming during the foam sheet manufacturing process, and the foam thickness is the thickness of the foam sheet after the curing and foaming.

Also, in Table 3 below, the density unit is $g/cm^3$.

In addition, the foaming magnification ratio is the value obtained by dividing the coating thickness by the foam thickness.

[Table 3]

| | | Coating thickness (mm) | Foam thickness (mm) | Foaming magnification ratio | Density | Flame-retardant rating (UL-94) |
|---|---|---|---|---|---|---|
| Example | 1 | 0.8 | 5 | 6.25 | 0.27 | V0 |
| | 2 | 0.8 | 5 | 6.25 | 0.27 | V0 |
| | 3 | 0.8 | 4.7 | 5.88 | 0.28 | V0 |
| | 4 | 0.8 | 4.5 | 5.63 | 0.28 | V0 |
| | 5 | 0.8 | 2.8 | 3.5 | 0.27 | V0 |
| | 6 | 0.8 | 2.8 | 3.5 | 0.27 | V0 |
| | 7 | 0.8 | 2.8 | 3.5 | 0.28 | V0 |
| | 8 | 0.8 | 2.8 | 3.5 | 0.28 | V0 |
| Comparative Example | 1 | 0.8 | 2.8 | 3.5 | 0.49 | V0 |
| | 2 | 0.8 | 2.2 | 2.75 | 0.61 | V0 |

From the results of Table 3, it can be known that foam sheets with a low-density and excellent flame retardancy can be obtained by selecting combinations of polyorganosiloxane components and inorganic hydrates.

For example, the foamable composition of Comparative Example 1 without any inorganic hydrate could not secure a high foaming magnification ratio even under the same foaming conditions as in Example 1, and accordingly, the foam sheet had a high density.

In the case of Comparative Example 2, it contained the inorganic hydrate in the same amount as that of Example 1, but could not secure an appropriate foaming magnification ratio under the same conditions as those of Example 1, and accordingly, the foam sheet with a low density could not be obtained. As described above, in the case of Comparative Examples 3 and 4, the production of the foamable composition or the foam sheet was impossible.

**Claims**

1. A foamable composition, comprising:

   a polyorganosiloxane component; and
   a hydrate of Formula 1 below:

   [Formula 1]   $M_rX_s \cdot nH_2O$

   wherein the M is a metal cation, the X is an anion, the r and the s are numbers satisfying $p \times r = q \times s$, where the p is an oxidation number of the metal cation, and the q is an oxidation number of the anion, and the n is a number of 8 or more.

2. The foamable composition according to claim 1, wherein the polyorganosiloxane component comprises a siloxane unit comprising silicon-bonded hydrogen, a siloxane unit comprising silicon-bonded hydroxy group, and a siloxane unit comprising silicon-bonded alkenyl group.

3. The foamable composition according to claim 2, satisfying Equations 1 to 3 below:

[Equation 1]

$$0.01 \leq OH/H \leq 10$$

[Equation 2]

$$50 \leq H/V \leq 600$$

[Equation 3]

$$0.01 \leq OH/(H+V) \leq 10$$

wherein, the H, the OH, and the V are the total mole number of the silicon-bonded hydrogen, the total mole number of the silicon-bonded hydroxy group and the total mole number of the silicon-bonded alkenyl group in the polyorganosiloxane component, respectively.

4. The foamable composition according to claim 3, wherein an amount of the silicon-bonded hydroxy groups in the polyorganosiloxane component is in a range of 0.05 to 5 mmol/g.

5. The foamable composition according to claim 1, wherein the M in Formula 1 is one or more selected from the group consisting of alkali metal ion, alkaline earth metal ion, post-transition metal ion, and metalloid ion.

6. The foamable composition according to claim 1, wherein the M in Formula 1 is two or more selected from the group consisting of alkali metal ion, alkaline earth metal ion, post-transition metal ion, and metalloid ion.

7. The foamable composition according to claim 1, wherein the M in Formula 1 comprises alkali metal ion and post-transition metal ion.

8. The foamable composition according to claim 1, wherein the M in Formula 1 is a cation of a metal belonging to Periods 2 to 4 of the periodic table.

9. The foamable composition according to claim 1, wherein the X in Formula 1 is one or more selected from the group consisting of halogen anion, $ClO_3^-$, $OH^-$, $HPO_4^{2-}$, $NO_3^-$, $SO_4^{2-}$, $S_2O_3^{2-}$ and $CH_3O_2^-$.

10. The foamable composition according to claim 1, wherein the inorganic hydrate has a D50 particle diameter in a range of 1 to 500 $\mu$m.

11. The foamable composition according to claim 1, wherein the inorganic hydrate is comprised in an amount of 0.5 to 100 parts by weight relative to 100 parts by weight of the polyorganosiloxane component.

12. The foamable composition according to claim 1, further comprising flame-retardant particles.

13. The foamable composition according to claim 12, wherein the flame-retardant particles have a D50 particle diameter in a range of 1 to 150 $\mu$m.

14. The foamable composition according to claim 12, wherein the flame-retardant particles are metal hydroxide particles.

15. The foamable composition according to claim 1, further comprising inorganic particles having a D50 particle diameter of 1 to 1,000 nm.

16. A foam sheet, comprising:

a polyorganosiloxane matrix; and
an inorganic hydrate dispersed within the matrix,
wherein a flame-retardant rating of the foam sheet is V1 or V0 by the Vertical Burning Test standard of UL 94, and a density of the foam sheet is 0.45 g/cm$^3$ or less.

17. The foam sheet according to claim 16, which is a foamed product of the foamable composition of any one of claims 1 to 15.

18. A battery module comprising the foam sheet according to claim 16.

19. The battery module according to claim 18, comprising a plurality of battery cells, wherein the foam sheet is present between some of the battery cells of the plurality of battery cells.

## INTERNATIONAL SEARCH REPORT

| International application No. |
|---|
| **PCT/KR2024/014648** |

| | |
|---|---|
| **A.** | **CLASSIFICATION OF SUBJECT MATTER** |

**C08J 9/00**(2006.01)i; **C08K 3/18**(2006.01)i; **C08L 83/06**(2006.01)i; **C08G 77/12**(2006.01)i; **C08G 77/16**(2006.01)i; **C08G 77/20**(2006.01)i; **H01M 10/655**(2014.01)i

According to International Patent Classification (IPC) or to both national classification and IPC

| | |
|---|---|
| **B.** | **FIELDS SEARCHED** |

Minimum documentation searched (classification system followed by classification symbols)

C08J 9/00(2006.01); C08G 59/56(2006.01); C08G 77/12(2006.01); C08J 9/02(2006.01); C08K 3/34(2006.01); C08K 3/36(2006.01); C08K 3/38(2006.01); C08L 83/07(2006.01); H01M 50/24(2021.01); H01M 50/242(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리오가노실록산(polyorganosiloxane), 금속(metal), 황산(sulfate), 알루미늄(aluminum), 칼륨(potassium), 발포성 조성물(foaming composition), 난연성(flame resistance), 배터리 모듈(battery module)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2425374 B1 (L2Y CO., LTD.) 27 July 2022 (2022-07-27) See paragraphs [0017]-[0021], [0023], [0040]-[0044], [0059], [0061], [0082]-[0085] and [0094]; table 1; and figures 1 and 5. | 1-19 |
| Y | KR 10-2020-0079381 A (HIGHFLUX CO., LTD.) 03 July 2020 (2020-07-03) See paragraphs [0013] and [0053]-[0058]. | 1-19 |
| A | WO 2022-245015 A1 (KCC SILICONE CORPORATION) 24 November 2022 (2022-11-24) See claims 1-6. | 1-19 |
| A | JP 2023-536397 A (WACKER CHEMIE AG) 25 August 2023 (2023-08-25) See claims 1-15. | 1-19 |
| A | US 2023-0159718 A1 (3M INNOVATIVE PROPERTIES COMPANY) 25 May 2023 (2023-05-25) See claims 1-15. | 1-19 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014648**

| Patent document cited in search report | | | Publication date (day/month/year) | Patent family member(s) | | | Publication date (day/month/year) |
|---|---|---|---|---|---|---|---|
| KR | 10-2425374 | B1 | 27 July 2022 | None | | | |
| KR | 10-2020-0079381 | A | 03 July 2020 | KR | 10-2161362 | B1 | 05 October 2020 |
| WO | 2022-245015 | A1 | 24 November 2022 | CN | 117295785 | A | 26 December 2023 |
| | | | | EP | 4342947 | A1 | 27 March 2024 |
| | | | | JP | 2024-518786 | A | 02 May 2024 |
| | | | | JP | 7573765 | B2 | 25 October 2024 |
| | | | | KR | 10-2022-0157185 | A | 29 November 2022 |
| | | | | KR | 10-2536230 | B1 | 26 May 2023 |
| | | | | US | 2024-0263010 | A1 | 08 August 2024 |
| JP | 2023-536397 | A | 25 August 2023 | CN | 115812087 | A | 17 March 2023 |
| | | | | EP | 4136169 | A1 | 22 February 2023 |
| | | | | KR | 10-2023-0015437 | A | 31 January 2023 |
| | | | | TW | 202202564 | A | 16 January 2022 |
| | | | | TW | I774409 | B | 11 August 2022 |
| | | | | US | 2023-0287193 | A1 | 14 September 2023 |
| | | | | WO | 2022-000413 | A1 | 06 January 2022 |
| US | 2023-0159718 | A1 | 25 May 2023 | CN | 115244115 | A | 25 October 2022 |
| | | | | CN | 117327323 | A | 02 January 2024 |
| | | | | EP | 3875519 | A1 | 08 September 2021 |
| | | | | JP | 2023-516363 | A | 19 April 2023 |
| | | | | WO | 2021-176372 | A1 | 10 September 2021 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230128791

- KR 102425374